# FASCICULE DE BREVET EUROPEEN

(11) **EP 4 375 522 B1**
(45) Date de publication et mention de la délivrance du brevet: **14.01.2026**
(21) Numéro de dépôt: 23210433.1
(22) Date de dépôt: 16.11.2023
(51) Int. Cl.: F16C 17/02, F16H 57/08

(54) **PALIER LISSE DE SATELLITE DE RÉDUCTEUR MECANIQUE À FONCTIONNEMENT SILENCIEUX**
GERÄUSCHARMES MECHANISCHES UNTERSETZUNGSGETRIEBE-SATELLITENGLEITLAGER
SILENT MECHANICAL GEAR SATELLITE SLIDING BEARING

(30) Priorité: 24.11.2022 FR 2212242
(43) Date de publication de la demande: 29.05.2024
(73) Titulaire: Safran Transmission Systems, 92700 Colombes (FR)
(72) Inventeur: PELTIER,, Jordane Emile André, 77550 MOISSY-CRAMAYEL (FR); GHRIBI,, Dhafer, 77550 MOISSY-CRAMAYEL (FR); PAP,, Bálint, 77550 MOISSY-CRAMAYEL (FR); PENNACINO,, Antoine Jacques Marie, 77550 MOISSY-CRAMAYEL (FR); SEREY,, Jean-Pierre, 77550 MOISSY-CRAMAYEL (FR)
(74) Mandataire: Gevers & Orès

(56) Documents cités:
- FR-A1- 3 071 023

## Description

### Domaine technique de l'invention

L'invention concerne un palier lisse pour un satellite d'un réducteur mécanique de turbomachine, et un réducteur mécanique comportant un tel palier lisse.

### Arrière-plan technique

L'état de l'art comprend notamment les documents WO-A1-2010/092263, FR-A1-2 987 416, FR-A1-3 041 054, FR-A1-3 071 022, FR-A1-3 071 023, FR-A1-3 071 023 et FR-A1-3 095 252-A1.

Le rôle d'un réducteur mécanique est de modifier le rapport de vitesse et de couple entre l'axe d'entrée et l'axe de sortie d'un mécanisme.

Les nouvelles générations de turbomachines notamment à double flux ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellite. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur le même diamètre de fonctionnement autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire,
- Sur un réducteur épicycloïdal, la couronne est fixe et le porte-satellites constitue l'arbre de sortie du dispositif qui tourne dans le même sens que le solaire,
- Sur un réducteur différentiel, aucun élément n'est fixé en rotation. La couronne tourne dans le sens contraire du solaire et du porte-satellites.

Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron. Un réducteur doit être lubrifié et l'apport d'huile de lubrification aux composants tournants d'un réducteur peut être problématique. L'huile est en général amenée au réducteur par un distributeur d'huile de lubrification.

Les satellites sont guidés en rotation par des paliers qui sont lubrifiés. Les paliers peuvent être composés d'éléments roulants (roulements à billes, à rouleaux, à rouleaux coniques, etc.) ou peuvent être des paliers lisses ou hydrodynamiques.

Dans ce dernier cas, chaque satellite est monté rotatif sur et autour d'un palier lisse, qui est alimenté en huile par le distributeur et qui est configuré pour former un film d'huile entre la périphérie externe du palier et la périphérie interne du satellite. Pour cela, dans la technique actuelle, chaque satellite comprend une surface cylindrique interne qui s'étend autour d'une surface cylindrique externe du palier et qui délimite avec cette dernière un espace annulaire de formation du film d'huile. Cet espace est alimenté en huile par des orifices de passage d'huile qui sont formés dans un fût du palier et s'étendent depuis la surface cylindrique externe jusqu'à un alésage central du fût qui est alimenté en huile par le distributeur précité.

Les paliers lisses sont des éléments massiques du réducteur dont le nombre est généralement compris entre 3 et 7. Plus la masse des paliers est élevée, plus elle a un impact sur le poids d'un réducteur, et donc d'un moteur. Par ailleurs, plus la masse des paliers est élevée, les paliers orbitant autour de l'axe du moteur (planétaire), plus peuvent se produire des conséquences néfastes tels que du balourd, des vibrations à forte amplitude, et des efforts radiaux sur le porte-satellites qui engendrent du désalignement entre le solaire, les satellites et la couronne. En outre, plus la masse des paliers est élevée, plus ils sont susceptibles de par les efforts centrifuges auxquels ils sont soumis de cisailler le film d'huile entre le palier et le satellite ce qui engendre des pertes par frottement qui sont générées dans les zones de rupture du film d'huile.

Pour limiter la masse de chaque palier, on a classiquement proposé de les alléger.

De manière connue, chaque palier présente un fût annulaire axial qui délimite un alésage central centré sur l'axe du fût. Le fût présente des rainures annulaires qui s'étendent autour de son axe et qui débouchent axialement selon des sens opposés aux extrémités axiales du fût. Chaque rainure annulaire est délimitée par deux parois coaxiales interne et externe du fût reliées par une paroi transversale de fond qui présente au moins une ouverture qui débouche dans une cavité qui est formée dans le fût entre l'alésage central et la périphérie du fût.

Le fût peut comporter une pluralité d'ouvertures qui peuvent être régulièrement réparties autour de l'alésage central. Les cavités peuvent être agencées dans le prolongement des ouvertures, en étant par exemple réalisées sous la forme de conduits cylindriques sensiblement rectilignes ou d'axes inclinés par rapport à l'axe de l'alésage central, obtenus par perçage ou par moulage. Les conduits peuvent traverser les paliers suivant toute leur longueur ou au contraire être borgnes. Les cavités peuvent aussi être de dimensions plus grandes que les ouvertures et former des poches dans le fût, notamment si elles sont formées dans le fût par moulage. Les cavités permettent en tout état de cause d'alléger le fût.

Avantageusement, les parois interne et externe de chaque rainure confèrent une souplesse aux extrémités axiales du palier et limitent la déformation du palier en assurant ainsi un bon alignement radial des dentures des pignons satellites avec le pignon central et la couronne externe.

Toutefois, on a constaté que la présence des cavités est une source non négligeable de bruit lorsque les paliers sont en rotation du fait de la rotation du porte-satellites.

Il est donc nécessaire de limiter les bruits générés par la rotation des paliers accompagnant le porte-satellites.

### Résumé de l'invention

L'invention remédie à l'inconvénient précité en obturant au moins partiellement chaque cavité.

Dans ce but, l'invention propose un palier lisse pour un satellite d'un réducteur mécanique de turbomachine, le palier lisse présentant un fût annulaire d'axe Y qui délimite au moins un alésage central centré sur l'axe Y, et le fût présentant des rainures annulaires qui s'étendent autour de l'axe Y et qui débouchent axialement selon des sens opposés aux extrémités axiales du fût, chaque rainure annulaire étant délimitée par deux parois interne et externe du fût reliées par une paroi transversale de fond qui présente au moins une ouverture qui débouche dans une cavité qui est formée dans le fût entre ledit au moins un alésage central et une périphérie du fût, caractérisé en ce que chaque cavité est fermée par un moyen d'obturation.

L'obturation des cavités permet d'éviter que de l'air ou de l'huile ne pénètre dans celles-ci et élimine donc toute source de bruit. Elle permet néanmoins de conserver un palier lisse de masse réduite du fait de la présence des cavités. Selon d'autres caractéristiques du palier :
- le moyen d'obturation est une plaque de fermeture qui s'étend au contact de la paroi de fond en travers de ladite au moins une ouverture,
- le moyen d'obturation est un matériau de remplissage qui est introduit dans ladite cavité et qui la remplit au moins partiellement,
- chaque cavité est fermée par un bouchon qui est reçu dans l'ouverture correspondante et au moins en partie dans ladite cavité,
- chaque cavité est un conduit cylindrique, notamment un perçage, qui débouche par son ouverture dans la paroi de fond, et en chaque bouchon comporte un corps cylindrique qui présente un diamètre correspondant à un diamètre dudit conduit cylindrique et qui est reçu dans ledit conduit,
- le bouchon comporte à une extrémité de son corps cylindrique une tête qui est d'une section supérieure au diamètre dudit conduit cylindrique et qui est apte à prendre appui contre la paroi de fond,
- le bouchon est emboîté, fretté, serti ou collé dans l'ouverture et/ou dans la cavité,
- le corps cylindrique du bouchon comporte un filetage et ledit corps est vissé dans un taraudage complémentaire formé dans le conduit cylindrique,
- le bouchon est réalisé en acier, en aluminium, ou en un matériau thermoplastique.

L'invention concerne aussi un réducteur mécanique d'une turbomachine à gaz pour aéronef, comprenant une couronne extérieure et des pignons satellites en prise avec le pignon central et avec la couronne extérieure et montés chacun libre en rotation sur un porte-satellites, les pignons satellites pouvant chacun tourner autour d'un axe de satellite par l'intermédiaire d'un palier lisse du type décrit précédemment.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue schématique en coupe axiale d'une turbomachine utilisant l'invention,
[Fig. 2] la figure 2 est une vue partielle en coupe axiale d'un réducteur mécanique selon l'état de la technique,
[Fig. 3] la figure 3 est vue similaire à celle de la figure 2 et représentant un mode de réalisation d'un réducteur mécanique comportant des satellites à paliers lisses selon l'état de la technique,
[Fig. 4] la figure 4 est une vue en perspective d'un palier lisse de réducteur selon l'invention,
[Fig. 5] la figure 5 est une vue en coupe du palier lisse de la figure 4,
[Fig. 6] la figure 6 est une vue en coupe de détail du palier lisse de la figure 6, et
[Fig. 7] la figure 7 est une vue en perspective d'un bouchon pour un palier lisse selon l'invention.

### Description détaillée de l'invention

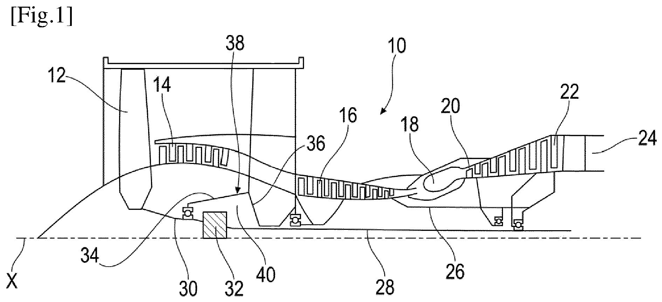

La figure 1 décrit une turbomachine 10 d'axe X qui comporte, de manière classique, une soufflante 12, un compresseur basse pression 14, un compresseur haute pression 16, une chambre annulaire de combustion 18, une turbine haute pression 20, une turbine basse pression 22 et une tuyère d'échappement 24. Le compresseur haute pression 16 et la turbine haute pression 20 sont reliés par un arbre haute pression 26 et forment avec lui un corps haute pression (HP). Le compresseur basse pression 14 et la turbine basse pression 20 sont reliés par un arbre basse pression 28 et forment avec lui un corps basse pression (BP).

La soufflante 12 est entraînée par un arbre de soufflante 30 qui est entrainé par l'arbre BP 28 au moyen d'un réducteur 32. Ce réducteur 32 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 32 est positionné dans la partie amont de la turbomachine. Dans la présente demande, les expressions amont et aval font référence à l'écoulement général des gaz dans la turbomachine, le long de son axe d'allongement ou de rotation de ses rotors.

Une structure fixe comportant schématiquement, ici, une partie amont 34 et une partie aval 36 qui compose le carter moteur ou stator 38 est agencée de manière à former une enceinte 40 entourant le réducteur 32. Cette enceinte 40 est ici fermée en amont par des joints au niveau d'un palier permettant la traversée de l'arbre de soufflante 30, et en aval par des joints au niveau de la traversée de l'arbre BP 28.

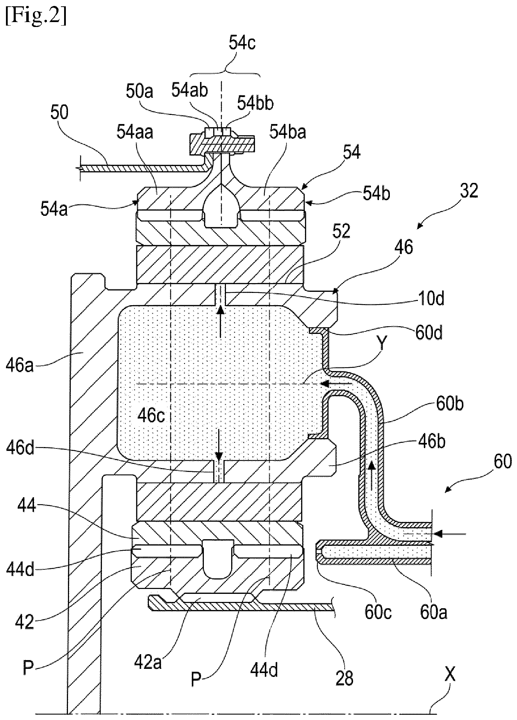

La figure 2 montre un réducteur épicycloïdal 32. En entrée, le réducteur 32 est relié à l'arbre BP 28, par exemple par l'intermédiaire de cannelures internes 42a. Ainsi, l'arbre BP 28 entraîne un pignon planétaire central 42 aussi appelé le solaire. Classiquement, le solaire 42, dont l'axe de rotation est confondu avec celui de la turbomachine X, entraîne une série de pignons appelés satellites 44, qui sont équirépartis sur le même diamètre autour de l'axe de rotation X. Ce diamètre est égal au double de l'entraxe de fonctionnement entre le solaire 42 et les satellites 44. Le nombre de satellites 44 est généralement défini entre trois et sept pour ce type d'application.

L'ensemble des satellites 44 est maintenu par un châssis appelé porte-satellites 46. Chaque satellite 44 tourne autour de son propre axe Y, et engrène avec une couronne 54.

En sortie nous avons :
- Dans cette configuration épicycloïdale, l'ensemble des satellites 44 entraine en rotation le porte-satellite 46 autour de l'axe X de la turbomachine. La couronne 54 est fixée au carter moteur ou stator 38 via un porte-couronne 50 et le porte-satellites 46 est fixé à l'arbre de soufflante 30.
- Dans une autre configuration planétaire, l'ensemble des satellites 44 est maintenu par un porte-satellites 46 qui est fixé au carter moteur ou stator 38. Chaque satellite 44 entraine la couronne 54 qui est rapportée à l'arbre de soufflante 30 via un porte-couronne 50.

Chaque satellite 44 comporte une portée interne 52 qui est montée libre en rotation à l'aide d'un palier lisse 46b qui est un palier de type roulement ou palier hydrodynamique. Chaque palier lisse 46b est fixé au porte-satellites 46 et tous les palier lisses 46b sont positionnés les uns par rapport aux autres à l'aide d'un ou plusieurs châssis structurels 46a du porte-satellites 46. Il existe un nombre de paliers lisses et de portées internes 52 égal au nombre de satellites. Pour des raisons de fonctionnement, de montage, de fabrication, de contrôle, de réparation ou de rechange, les paliers 46b et le châssis 46a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne 54 séparée en deux demi-couronnes 54a et 54b: Une demi-couronne amont 54a constituée d'une jante 54aa et d'une demi-bride de fixation 54ab. Sur la jante 54aa se trouve l'hélice amont de la denture du réducteur. Cette hélice amont engrène avec celle du satellite 44 qui engrène avec celle du solaire 42.

Une demi-couronne aval 54b constituée d'une jante 54ba et d'une demi-bride de fixation 54bb. Sur la jante 54ba se trouve l'hélice aval de la denture du réducteur. Cette hélice aval engrène avec celle du satellite 44 qui engrène avec celle du solaire 42.

Si les largeurs d'hélice varient entre le solaire 42, les satellites 44 et la couronne 54 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 54ab de la couronne amont 54a et la demi-bride de fixation 54bb de la couronne aval 54b forment la bride de fixation 54c de la couronne. La couronne 54 est fixée à un porte-couronne en assemblant la bride de fixation 54c de la couronne et la bride de fixation 50a du porte-couronne 50 à l'aide d'un montage boulonné par exemple.

Les flèches de la figure 2 décrivent l'acheminement de l'huile dans le réducteur 32. L'huile arrive dans le réducteur 32 depuis la partie stator 38 dans un distributeur 60 par différents moyens qui ne seront pas précisés dans cette vue car ils sont spécifiques à un ou plusieurs types d'architecture. Le distributeur 60 comprend des injecteurs 60a et des bras 60b. Les injecteurs 60a ont pour fonction de lubrifier les dentures et les bras 60b ont pour fonction de lubrifier les paliers. L'huile est amenée vers l'injecteur 60a pour ressortir par l'extrémité 60c afin de lubrifier les dentures.

L'huile est également amenée vers le bras 60b et circule via la bouche d'alimentation 60d du palier 46b. L'huile circule ensuite à travers le palier lisse 46b dans un ou des alésages 46c pour ensuite ressortir par des canalisations 46d afin de lubrifier les portées internes 52 des satellites 44.

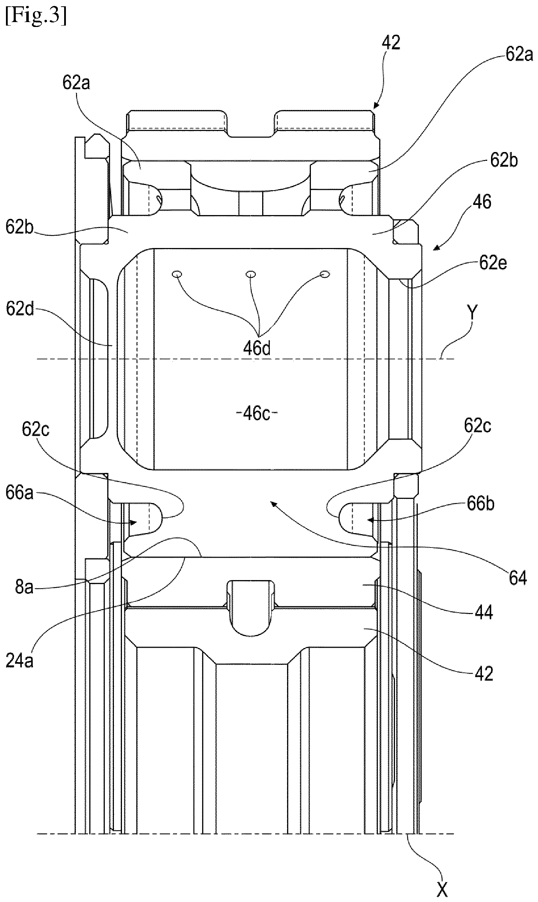

La figure 3 représente un autre réducteur mécanique 32 comportant des satellites 44 montés sur paliers hydrodynamiques ou palier lisses connu de l'état de la technique. Dans cet exemple le palier lisse 46b et le châssis structurel 46a sont en deux pièces.

Le palier lisse 46b de chaque satellite 42 comprend un fût annulaire monobloc 64 dans l'exemple représenté ici qui comporte deux parois annulaires externe 62a et interne 62b coaxiales qui s'étendent l'une autour de l'autre et qui sont reliées entre elles par une paroi transversale de fond 62c.

La paroi annulaire interne 62b et l'alésage 46c sont fermés par une cloison 62d et comportent du côté opposé une extrémité axiale 62e ouverte du côté opposé pour recevoir dans l'alésage 46c de l'huile de lubrification apportée par le distributeur d'huile (non représenté).

Le palier lisse 46b comprend des canalisations 46d d'acheminement d'huile de lubrification depuis l'alésage 46c jusqu'à la périphérie externe du palier 46b. Les parois annulaires coaxiales 62a, 62b délimitent entre elles des rainures annulaires 66a, 66b. Cette configuration permet de conférer une certaine souplesse au palier 46b, au niveau de chacune de ses extrémités axiales.

Le palier 46b comprend ainsi une première rainure annulaire 66a située d'un côté et dont l'ouverture débouche en direction axiale, et une seconde rainure annulaire 66b située du côté opposé du palier et dont l'ouverture débouche axialement du côté opposé à la rainure 66a. Ces rainures 66a, 66b ont en section une forme générale en U.

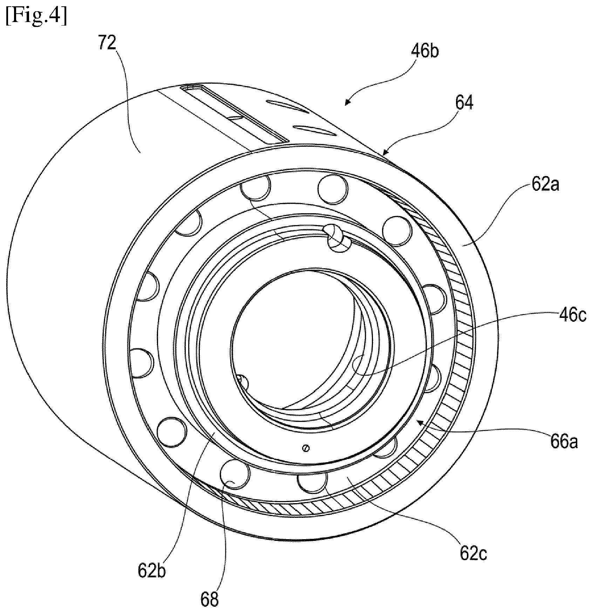

Les figures 4 à 6 représentent plus particulièrement un palier lisse 46b selon l'invention. De manière non limitative de celle-ci, le palier lisse 46b comporte deux alésages 46c dont un est fermé par une cloison 62d et qui sont séparés par une paroi transversale 46e dans laquelle est formée un des conduits 46d dont une branche 46f en T relie les deux alésages 46c de manière qu'ils communiquent l'un avec l'autre.

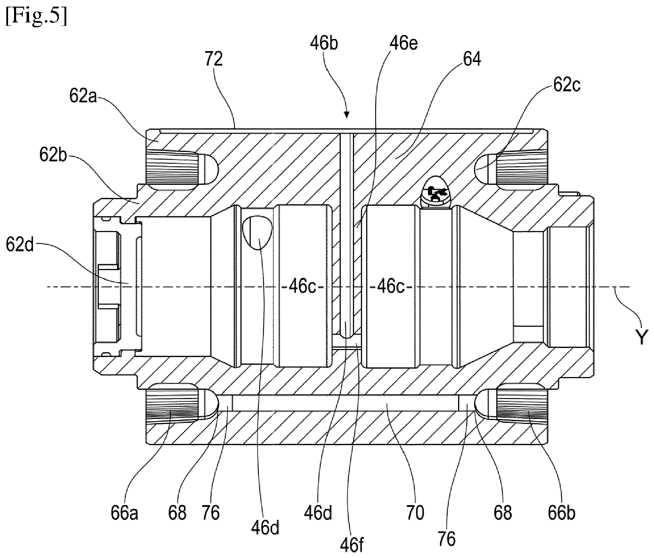

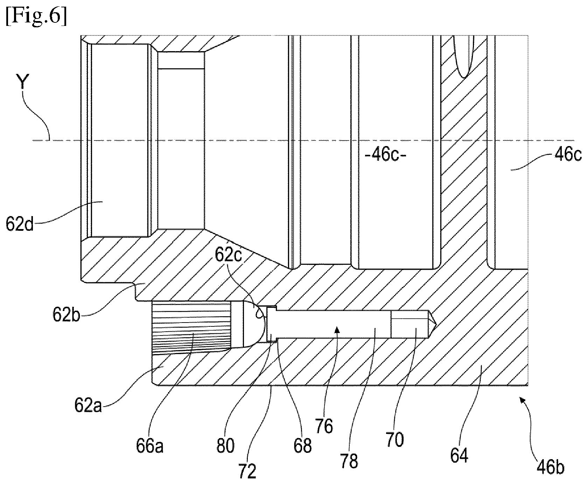

De chaque côté du fût 64, chaque paroi transversale de fond 62c présente au moins une ouverture 68 qui débouche dans une cavité 70 qui est formée dans le fût 64, radialement entre ledit au moins un alésage central 46c et une périphérie 72 du fût 64. Dans l'exemple qui a été représenté à la figure 5, le fût 64 comporte une seule cavité 70, commune à des paires d'ouvertures 68 opposées alignées selon un axe Y parallèle à l'axe X. Cette configuration n'est pas limitative de l'invention et, comme l'illustre la figure 6, les ouvertures 68 pourraient communiquer avec des cavités 70 borgnes ne communiquant pas entre elles.

Dans l'exemple qui a été représenté ici, chaque cavité 70 est un conduit cylindrique, qui débouche par son ouverture 68 dans la paroi de fond 62c. Le conduit cylindrique peut être obtenu par moulage ou par perçage, et de ce fait l'ouverture 68 est circulaire et de même diamètre que le conduit formant la cavité 70.

Il sera bien évidemment compris que cette configuration n'est pas limitative de l'invention. La cavité 70 n'est pas nécessairement cylindrique et peut prendre toute forme visant à alléger le fût 64. Par exemple, la cavité 70 pourrait former une poche dans le matériau du fût, de dimensions supérieures à celles de l'ouverture 68. L'ouverture 68 pourrait aussi ne pas être circulaire, sans limitation de l'invention.

Les cavités 70 permettent d'alléger le fût 64. Toutefois, on a constaté que la présence des cavités 70 est une source non négligeable de bruit lorsque les paliers 46b sont en rotation du fait de la rotation du porte-satellites.

Conformément à l'invention, pour remédier à cet inconvénient, chaque cavité 70 est fermée par un moyen d'obturation 76.

Selon un premier mode de réalisation de l'invention qui n'a pas été représenté sur les figures, le moyen d'obturation pourrait être une plaque de fermeture qui s'étendrait au contact de la paroi de fond 62c en travers de ladite au moins une ouverture 68. En particulier, une telle plaque pourrait être annulaire et épouser la paroi de fond 62c en étant logée dans les rainures 66a, 66b pour couvrir toutes les ouvertures.

Selon un deuxième mode de réalisation de l'invention qui n'a pas été représenté sur les figures, le moyen d'obturation pourrait être un matériau de remplissage qui est introduit par l'ouverture 68 dans la cavité 70 et qui la remplit au moins partiellement. Le matériau peut être solidifié dans la cavité 70 pour éviter qu'il ne s'en échappe. Aussi, de préférence, le matériau de remplissage est-il injecté, coulé ou moulé dans la cavité 70.

Selon un troisième mode de réalisation de l'invention qui a été représenté sur les figures 5 à 7, chaque cavité est fermée par un bouchon formant le moyen d'obturation 76 qui est reçu dans l'ouverture 68 correspondante et au moins en partie dans la cavité 70.

Le bouchon 76 est prévu pour s'adapter à l'ouverture 68. A cet effet, il est de même section que l'ouverture 68 ou bien est déformable et expansible pour pouvoir y être introduit et s'y expandre en obturant l'ouverture 68.

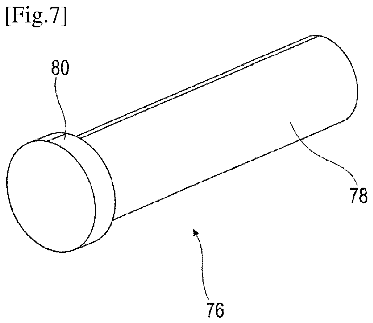

Comme on l'a vu, dans l'exemple référence aux figures 5 et 6, chaque cavité 70 est un conduit cylindrique, qui débouche par son ouverture 68 dans la paroi de fond 62c. Dans cette configuration, comme on peut le voir aussi à la figure 7, chaque bouchon 76 comporte un corps cylindrique 78 qui présente un diamètre correspondant à un diamètre du conduit cylindrique 70 et qui est reçu dans ledit conduit.

Pour limiter la pénétration du bouchon 76 dans la cavité 68, celui-ci comporte à une extrémité de son corps cylindrique 78 une tête 80 qui est d'une section supérieure à un diamètre du conduit cylindrique 70 et qui est apte à prendre appui contre la paroi de fond 62c.

Le bouchon 76 est de préférence immobilisé dans l'ouverture 68. Aussi quel que soit son mode de réalisation, le bouchon 76 est emboîté, fretté, serti ou collé dans l'ouverture 68 et/ou dans la cavité 70.

Lorsque la cavité 70 est cylindrique comme représenté aux figures 5 et 6, le corps cylindrique 78 du bouchon 76 peut comporter un filetage et être vissé dans un taraudage complémentaire formé dans le conduit cylindrique 70. En cas, on comprendra que la tête 80 du bouchon pourra comporter une empreinte complémentaire d'un outil de vissage.

Le bouchon 76 est réalisé en acier, en aluminium, ou en un matériau thermoplastique. Il peut également être réalisé en mousse, celle-ci présentant l'avantage de se gorger d'huile de lubrification pour assurer l'étanchéité du bouchon 76.

L'invention permet donc de bénéficier d'un réducteur 32 d'une turbomachine à gaz pour aéronef tel qu'un réducteur 32 de type planétaire ou épicycloïdal, comprenant une couronne extérieure 54 et des pignons satellites 44 en prise avec un pignon central 42 et avec la couronne extérieure 54 et montés chacun libre en rotation sur un porte-satellites 46, les pignons 44 satellites pouvant chacun tourner autour d'un axe Y de satellite par l'intermédiaire d'un palier 46b du type décrit précédemment. Un tel réducteur 42 présente un silence de fonctionnement accru par rapport aux réducteurs connus de l'état de la technique.

## Revendications

1. Palier lisse (46b) pour un satellite (44) d'un réducteur mécanique (32) de turbomachine, le palier lisse (46b) présentant un fût (64) annulaire d'axe (Y) qui délimite au moins un alésage central (46c) centré sur l'axe (Y), et le fût (64) présentant des rainures annulaires (66a, 66b) qui s'étendent autour de l'axe (Y) et qui débouchent axialement selon des sens opposés aux extrémités axiales du fût (64), chaque rainure annulaire (66a, 66b) étant délimitée par deux parois interne (62b) et externe (62a) du fût (64) reliées par une paroi transversale de fond (62c) qui présente au moins une ouverture (68) qui débouche dans une cavité (70) qui est formée dans le fût (64) entre ledit au moins un alésage central (46) et une périphérie (72) du fût (64),
**caractérisé en ce que** chaque cavité (70) est fermée par un moyen d'obturation (76).

2. Palier lisse (46b) selon la revendication 1, **caractérisé en ce que** le moyen d'obturation (76) s'étend au contact de la paroi de fond (62c) en travers de ladite au moins une ouverture (68).

3. Palier lisse (46b) selon la revendication 1, **caractérisé en ce que** le moyen d'obturation (76) comprend un matériau de remplissage qui est introduit dans ladite cavité (70) et qui la remplit au moins partiellement.

4. Palier lisse (46b) selon la revendication 1, **caractérisé en ce que** chaque cavité (70) est fermée par un bouchon formant le moyen d'obturation (76) qui est reçu dans l'ouverture correspondante (68) et au moins en partie dans ladite cavité (70).

5. Palier lisse (46b) selon la revendication précédente, **caractérisé en ce que** chaque cavité (70) est un conduit cylindrique, notamment un perçage, qui débouche par son ouverture (68) dans la paroi de fond (62c), et **en ce que** chaque bouchon (76) comporte un corps cylindrique (78) qui présente un diamètre correspondant à un diamètre dudit conduit cylindrique (70) et qui est reçu dans ledit conduit (70).

6. Palier lisse (46b) selon la revendication précédente, **caractérisé en ce que** le bouchon (76) comporte à une extrémité de son corps cylindrique (78) une tête (80) dont une section est supérieure au diamètre dudit conduit cylindrique (70) et qui est apte à prendre appui contre la paroi de fond (62c).

7. Palier lisse (46b) selon l'une des revendications 4 à 6, **caractérisé en ce que** le bouchon (76) est emboîté, fretté, serti ou collé dans l'ouverture et/ou dans la cavité.

8. Palier lisse (46b) selon l'une des revendications 5 ou 6, **caractérisé en ce que** le corps cylindrique (78) du bouchon (76) comporte un filetage et **en ce que** ledit corps (78) est vissé dans un taraudage complémentaire formé dans le conduit cylindrique (70).

9. Palier lisse (46b) selon l'une des revendications 4 à 8, **caractérisé en ce que** le bouchon (76) est réalisé en acier, en aluminium, ou en un matériau thermoplastique.

10. Réducteur mécanique (32) de turbomachine à gaz pour aéronef, comprenant une couronne extérieure (54) et des pignons satellites (44) en prise avec un pignon central (42) et avec une couronne extérieure (54) et montés chacun libre en rotation sur un porte-satellites (46), les pignons satellites (44) pouvant chacun tourner autour d'un axe de satellite par l'intermédiaire d'un palier lisse (46b) selon l'une quelconque des revendications 1 à 9.

## Patentansprüche

1. Gleitlager (46b) für einen Satelliten (44) eines mechanischen Getriebes (32) eines Turbotriebwerks, wobei das Gleitlager (46b) ein ringförmiges Gebinde (64) mit einer Achse (Y) aufweist, das mindestens eine auf der Achse (Y) zentrierte zentrale Ausbohrung umgrenzt, und wobei das Gebinde (64) ringförmige Nuten (66a, 66b) aufweist, die sich um die Achse (Y) herum erstrecken und die axial gemäß entgegengesetzten Richtungen an den axialen Enden des Gebindes (64) münden, wobei jede ringförmige Nut (66a, 66b) durch zwei interne (62b) und externe (62a) Wände des Gebindes (64) umgrenzt wird, die durch eine querlaufende Bodenwand (62c) verbunden sind, die mindestens eine Öffnung (68) aufweist, die in einem Hohlraum (70) mündet und die in dem Gebinde (64) zwischen der mindestens einen zentralen Ausbohrung (46) und einer Peripherie (72) des Gebindes (64) gebildet ist,
**dadurch gekennzeichnet, dass** jeder Hohlraum (70) durch ein Verschlussmittel (76) verschlossen ist.

2. Gleitlager (46b) nach Anspruch 1, **dadurch gekennzeichnet, dass** sich das Verschlussmittel (76) in Kontakt mit der Bodenwand (62c) quer durch die mindestens eine Öffnung (68) erstreckt.

3. Gleitlager (46b) nach Anspruch 1, **dadurch gekennzeichnet, dass** das Verschlussmittel (76) ein Füllmaterial beinhaltet, das in den Hohlraum (70) eingeführt wird und das ihn mindestens teilweise füllt.

4. Gleitlager (46b) nach Anspruch 1, **dadurch gekennzeichnet, dass** jeder Hohlraum (70) durch einen Stopfen verschlossen ist, der das Verschlussmittel (76) bildet, das in der entsprechenden Öffnung (68) und mindestens zum Teil in dem Hohlraum (70) aufgenommen ist.

5. Gleitlager (46b) nach dem vorstehenden Anspruch, **dadurch gekennzeichnet, dass** jeder Hohlrum (70) eine zylindrische Leitung ist, insbesondere eine Bohrung, die durch ihre Öffnung (68) in der Bodenwand (62c) mündet, und dadurch, dass jeder Stopfen (76) einen zylindrischen Körper (78) umfasst, der einen Durchmesser aufweist, der einem Durchmesser der zylindrischen Leitung (70) entspricht und der in der Leitung (70) aufgenommen ist.

6. Gleitlager (46b) nach dem vorstehenden Anspruch, **dadurch gekennzeichnet, dass** der Stopfen (76) an einem Ende seines zylindrischen Körpers (78) einen Kopf (80) umfasst, von dem ein Querschnitt größer ist als der Durchmesser der zylindrischen Leitung (70) und der in der Lage ist, gegen die Bodenwand (62c) zur Anlage zu kommen.

7. Gleitlager (46b) nach einem der Ansprüche 4 bis 6, **dadurch gekennzeichnet, dass** der Stopfen (76) in der Öffnung und/oder dem Hohlraum aufgesteckt, aufgepresst, eingepresst oder geklebt ist.

8. Gleitlager (46b) nach einem der Ansprüche 5 oder 6, **dadurch gekennzeichnet, dass** der zylindrische Körper (78) des Stopfens (76) ein Gewinde umfasst, und dadurch, dass der Körper (78) in einem komplementären Innengewinde verschraubt ist, das in der zylindrischen Leitung (70) gebildet ist.

9. Gleitlager (46b) nach einem der Ansprüche 4 bis 8, **dadurch gekennzeichnet, dass** der Stopfen (76) aus Stahl, aus Aluminium oder einem thermoplastischen Material hergestellt ist.

10. Mechanisches Getriebe (32) eines Gas-Turbotriebwerks für ein Luftfahrzeug, beinhaltend eine externe Krone (54) und Satellitenritzel (44) in Eingriff mit einem zentralen Ritzel (42) und mit einer externen Krone (54), und jeweils drehbeweglich auf einem Satellitenträger (46) montiert, wobei die Satellitenritzel (44) mit Hilfe von einem Gleitlager (46b) nach einem der Ansprüche 1 bis 9 jeweils um eine Satellitenachse herum drehen können.

## Claims

1. A plain bearing (46b) for a planet gear (44) of a turbomachine mechanical reduction gear (32), the plain bearing (46b) having an annular barrel (64) with an axis (Y) which delimits at least one central bore (46c) centred on the axis (Y), and the barrel (64) having annular grooves (66a, 66b) which extend around the axis (Y) and which open axially in opposite orientations at the axial ends of the barrel (64), each annular groove (66a, 66b) being delimited by two internal (62b) and external (62a) walls of the barrel (64) connected by a transverse bottom wall (62c) which has at least one opening (68) which opens into a cavity (70) which is formed in the barrel (64) between said at least one central bore (46) and a periphery (72) of the barrel (64),
**characterised in that** each cavity (70) is closed by a sealing means (76).

2. The plain bearing (46b) according to claim 1, **characterised in that** the sealing means (76) extends in contact with the bottom wall (62c) across said at least one opening (68).

3. The plain bearing (46b) as claimed in claim 1, **characterised in that** the sealing means (76) comprises a filling material which is introduced into said cavity (70) and at least partially fills it.

4. The plain bearing (46b) according to claim 1, **characterised in that** each cavity (70) is closed by a plug forming the sealing means (76) which is received in the corresponding opening (68) and at least partly in said cavity (70).

5. The plain bearing (46b) according to the preceding claim, **characterised in that** each cavity (70) is a cylindrical duct, in particular a drilling, which opens out via its opening (68) into the bottom wall (62c), and **in that** each plug (76) comprises a cylindrical body (78) which has a diameter corresponding to a diameter of said cylindrical duct (70) and which is received in said duct (70).

6. The plain bearing (46b) according to the preceding claim, **characterised in that** the plug (76) comprises, at one end of its cylindrical body (78), a head (80), a cross-section of which is greater than the diameter of said cylindrical duct (70) and which is capable of bearing against the bottom wall (62c).

7. The plain bearing (46b) according to one of claims 4 to 6, **characterised in that** the plug (76) is fitted, shrunk, crimped or glued in the opening and/or in the cavity.

8. The plain bearing (46b) according to one of claims 5 or 6, **characterised in that** the cylindrical body (78) of the plug (76) comprises a thread and **in that** said body (78) is screwed into a complementary tapping formed in the cylindrical duct (70).

9. The plain bearing (46b) according to one of claims 4 to 8, **characterised in that** the plug (76) is made of steel, aluminium or a thermoplastic material.

10. A mechanical reduction gear (32) for an aircraft gas turbomachine, comprising an outer ring gear (54) and planet gear pinions (44) engaged with a central pinion (42) and with an outer ring gear (54) and each mounted to rotate freely on a planet carrier (46), the planet gear pinions (44) each being rotatable about a planet gear axis via a plain bearing (46b) according to any one of claims 1 to 9.
